# EUROPÄISCHE PATENTSCHRIFT

(11) **EP 1 118 979 B1**
(45) Veröffentlichungstag und Bekanntmachung des Hinweises auf die Patenterteilung: **17.12.2008**
(21) Anmeldenummer: 01101110.3
(22) Anmeldetag: 18.01.2001
(51) Int. Cl.: G10L 15/26

(54) **Sprachgesteuerte Vorrichtung**
Speech controled device
Appareil commandé par la voix

(30) Priorität: 20.01.2000 DE 10002321
(43) Veröffentlichungstag der Anmeldung: 25.07.2001
(73) Patentinhaber: Micronas GmbH, 79108 Freiburg i. Br. (DE)
(72) Erfinder: Armbrecht, Lothar, Dr., 81673 München (DE); Burchard, Bernd, Dr., 85521 Ottobrunn (DE)
(74) Vertreter: Patentanwälte Westphal, Mussgnug & Partner

(56) Entgegenhaltungen:
- EP-A- 0 867 860
- US-A- 5 267 323
- PATENT ABSTRACTS OF JAPAN vol. 018, no. 085 (P-1691), 10. Februar 1994 (1994-02-10) & JP 05 289690 A (SANYO ELECTRIC CO LTD), 5. November 1993 (1993-11-05)
- PATENT ABSTRACTS OF JAPAN vol. 017, no. 307 (E-1379), 11. Juni 1993 (1993-06-11) & JP 05 022779 A (SONY CORP), 29. Januar 1993 (1993-01-29)
- TSUYOSHI USAGAWA ET AL: "REMOTE CONTROL SYSTEM USING SPEECH REDUCTION OF KNOWN NOISE" PROCEEDINGS OF THE INTERNATIONAL CONFERENCE ON SPOKEN LANGUAGE PROCESSING (ICSLP),JP,TOKYO, ASJ, 18. November 1990 (1990-11-18), Seiten 289-292, XP000503367

## Beschreibung

Die vorliegende Erfindung betrifft eine sprachgesteuerte Vorrichtung nach dem Anspruch 1 sowie ein eine derartige sprachgesteuerte Vorrichtung umfassendes System nach dem Anspruch 10.

Zur Steuerung von Fernsehgeräten oder anderen Geräten der Unterhaltungselektronik ist es sinnvoll, direkt die menschliche Sprache einzusetzen. Durch die Verwendung einer sprachgesteuerten Mesch/Maschine-Schnittstelle ergeben sich mannigfaltige Vorteile, wie insbesondere eine einfachere Bedienbarkeit des jeweiligen Geräts für den Benutzer etc.. Für viele bereits vorhandene Geräte ohne Sprachsteuerungsmöglichkeit ist daher eine Nachrüstung mit einer Sprachsteuerung von besonderem Interesse.

Bei der Sprachsteuerung eines Geräts tritt allgemein das Problem auf, daß das von dem jeweiligen Gerät durch Lautsprecher erzeugte Schall- oder Tonsignal mit dem gesprochenen Sprachbefehl in der Luft vermischt wird und somit diesen überlagert, wodurch die Erkennbarkeit des Sprachbefehls für den Spracherkenner verschlechtert wird. Dasselbe gilt auch für externe Schallquellen, deren Geräusch- oder Tonsignale den Sprachbefehl eines Benutzers überlagern können. Soll beispielsweise ein Fernsehgerät über Sprache gesteuert werden und ist in demselben Raum eine Stereoanlage oder dergleichen eingeschaltet, hat dies eine deutlich schlechtere Erkennbarkeit des Sprachbefehls zur Folge, da die von der Stereoanlage erzeugten Tonsignale den gesprochenen Befehl des Benutzers überlagern. Aufgrund der unbekannten Störgeräusche weist das daraus resultierende Schallsignal, welches der Spracherkennung des sprachgesteuerten Geräts zur Umsetzung in ein entsprechendes Steuersignal zugeführt wird, somit einen relativ schlechten Signal-Rausch-Abstand auf.

Die EP 0 867 860 A2 beschreibt eine sprachgesteuerte Vorrichtung mit einer ein Mikrofon aufweisenden Fernbedienung. Durch das Mikrofon empfangene Schallsignale werden bei dieser Vorrichtung einem HF-Signal aufmoduliert und an eine Kompensationseinrichtung in einem zu steuernden Fernsehgerät übertragen. Die Kompensationseinrichtung verarbeitet die empfangenen Schallsignale zusammen mit Schallinformationen, die Lautsprechern zugeführt werden, um ein gefiltertes Schallsignal zur Verfügung zu stellen, das einer Spracherkennungseinrichtung zugeführt ist.

Die US 5,267,323 beschreibt eine sprachgesteuerte Fernbedienung, die zwei Mikrofone und Spracherkennungsmittel aufweist, wobei ein erstes Mikrofon zur Zuführung von Sprachbefehlen und ein zweites Mikrofon zur Aufnahme von Umgebungsgeräuschen dient. Die Fernbedienung weist außerdem eine Kompensationseinrichtung auf, die ein über das erste Mikrofon zugeführtes Schallsignal mit Schallsignalen, die über das zweite Mikrofon zugeführt werden, kompensiert.

Der vorliegenden Erfindung liegt daher die Aufgabe zugrunde, eine sprachgesteuerte Vorrichtung vorzuschlagen, bei der auch bei Vorhandensein einer Schallquelle, deren Schallsignal den zur Steuerung der Vorrichtung vorgesehenen Sprachbefehl überlagert, ein ausreichend guter Signal-Rausch-Abstand erzielt werden kann, um auch in diesem Fall stets die Erkennbarkeit des Sprachbefehls zu gewährleisten.

Diese Aufgabe wird erfindungsgemäß durch eine Vorrichtung mit den Merkmalen des Anspruches 1 gelöst. Die Unteransprüche definieren vorteilhafte und bevorzugte Ausführungsformen der vorliegenden Erfindung.

Erfindungsgemäß sind der sprachgesteuerten Vorrichtung Empfangsmittel zugeordnet, welche Schallinformationen von Sendemitteln empfangen, die mindestens einer Schallquelle zugeordnet sind. Bei dieser Schallquelle kann es sich beispielsweise um einen Lautsprecher der Vorrichtung selbst oder aber auch um Lautsprecher anderer Geräte handeln. Die erfindungsgemäße sprachgesteuerte Vorrichtung wird demzufolge bevorzugt in einem System mit den Merkmalen des Anspruches 11 eingesetzt.

Mit den Schallinformationen wird insbesondere die Tonlage, Lautstärke etc. des von der entsprechenden Schallquelle augenblicklich erzeugten Ton- oder Schallsignals mitgeteilt.

Die sprachgesteuerte Vorrichtung empfängt einen Sprachbefehl in Form eines Schallsignals. Dieses Schallsignal setzt sich jedoch nicht nur aus dem Sprachbefehl, sondern auch aus den Umgebungsgeräuschen, wie insbesondere dem von der Schallquelle erzeugten Tonsignal, zusammen. Da der sprachgesteuerten Vorrichtung aufgrund der Schallinformationen das jeweils augenblicklich erzeugte Tonsignal bekannt ist, kann das von der sprachgesteuerten Vorrichtung erfasste Schallsignal entsprechend korrigiert und um diejenige Komponente, welche dem Tonsignal der Schallquelle entspricht, bereinigt werden. Erst das auf diese Weise korrigierte oder gefilterte Schallsignal wird der Spracherkennung zugrunde gelegt.

Da das korrigierte Schallsignal neben dem Sprachbefehl nur noch unbekannte Störgeräusche enthält, weist es gegenüber dem ursprünglichen Schallsignal einen deutlich verbesserten Signal-Rausch-Abstand (S/N) auf.

Die Übertragung der Schallinformationen an die der sprachgesteuerten Vorrichtung zugeordneten Empfangsmittel kann insbesondere drahtlos, beispielsweise über einen Infrarot- oder Funkkanal, erfolgen.

Besonders vorteilhaft ist es, wenn diese Empfangsmittel in ein zum Betrieb der sprachgesteuerten Vorrichtung vorgesehenes Mobilteil (Fernbedienung) integriert werden. Ebenso können die Schallsignalverarbeitungsmittel, welche die beschriebene Korrektur oder Filterung des den Sprachbefehl umfassenden Schallsignals durchführen, sowie die Spracherkennungsmittel, welche die daran anschließende Spracherkennung durchführen, in das Mobilteil integriert sein. Von den Spracherkennungsmitteln wird dann mittels Spracherkennung ein dem korrigierten Schallsignal entsprechendes Steuersignal erzeugt, welches beispielsweise über einen Infrarot-Sender an die sprachgesteuerte Vorrichtung übertragen wird. Es ist jedoch auch grundsätzlich denkbar, daß sich die Empfangsmittel sowie die Schallsignalverarbeitungsmittel in der sprachgesteuerten Vorrichtung selbst befinden.

Die vorliegende Erfindung eignet sich allgemein zur Sprachsteuerung beliebig ausgestalteter Vorrichtungen, insbesondere zur Sprachsteuerung von Geräten der Unterhaltungselektronik, wie beispielsweise Stereoanlagen oder Fernsehgeräte.

Die Erfindung wird nachfolgend näher anhand eines bevorzugten Ausführungsbeispiels unter Bezugnahme auf die beigefügte Zeichnung erläutert.

Fig. 1 zeigt beispielhaft die Verwendung einer erfindungsgemäßen sprachgesteuerten Vorrichtung in einem System mit mehreren Schallquellen, und

Fig. 2 zeigt beispielhaft den Aufbau einer in Fig. 1 gezeigten Fernbedienung gemäß einem Ausführungsbeispiel der vorliegenden Erfindung.

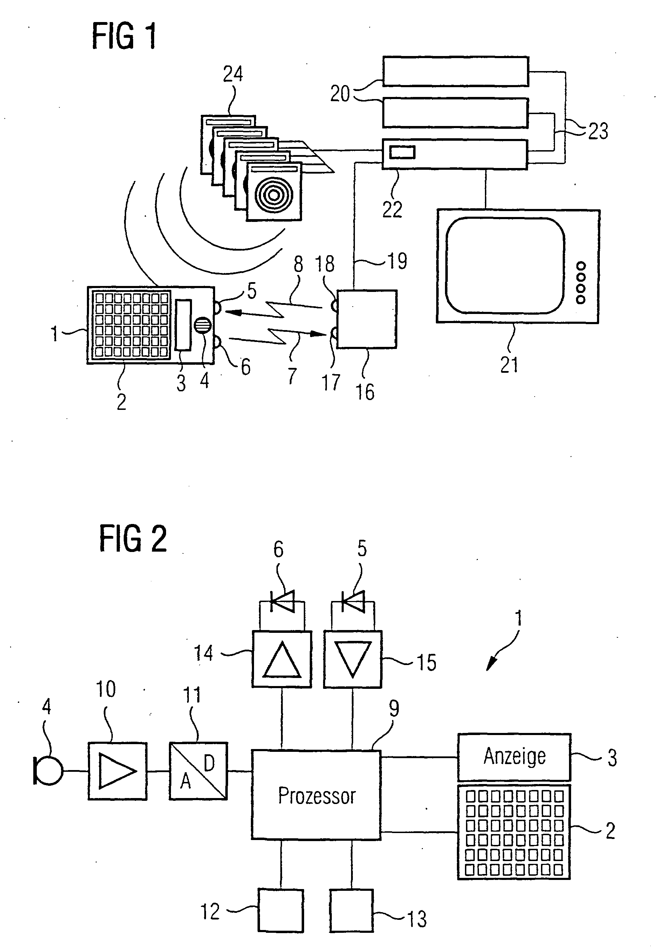

Das in Fig. 1 gezeigte System umfaßt eine Stereoanlage mit einem Verstärker 22 und mehreren Lautsprechern 24. An den Verstärker 22 sind über Anschlußleitungen 23 verschiedene Ton- oder Schallquellen 20, wie beispielsweise ein Tuner, ein Kassettendeck, ein DAT-Gerät oder ein Videorecorder etc., angeschlossen. Zudem ist bei dem dargestellten Beispiel ein Fernsehgerät 21 an den Verstärker 22 angeschlossen.

Mit dem Verstärker 22 ist über eine Anschlußleitung 19 ein Zusatzgerät 16 verbunden, welches auch in eines der dargestellten Geräte integriert sein kann. Von dem Zusatzgerät 16 werden die von dem Gesamtsystem, d.h. dem Fernsehgerät 21 und der Stereoanlage 20, 23, erzeugten Tonsignale über die Anschlußleitung 19 empfangen, zusammengemischt, codiert und/oder moduliert und in entsprechende analoge oder digitale Schall- oder Toninformationen umgesetzt, welche mit Hilfe eines Senders 18 über einen Übertragungskanal 8 an einen entsprechenden Empfänger 5 einer Fernbedienung 1 übertragen werden. Bei dem Übertragungskanal 8 kann es sich insbesondere um einen Infrarot- oder Funkkanal, beispielsweise gemäß dem Bluetooth-Mobilfunkstandard, handeln. Andererseits werden von einem Sender 6 der Fernbedienung 1 über einen Übertragungskanal 7 Steuerinformationen für den Betrieb des Fernsehgeräts 21 oder der Stereoanlage 20, 22, 23 an einen Empfänger 17 des Zusatzgeräts 16 übertragen. Das Zusatzgerät 16 steht somit mit der Fernbedienung 1 bidirektional in Verbindung.

Wie in Fig. 2 gezeigt ist, umfaßt die Fernbedienung 1 für den Fall einer Infrarotübertragung eine IR-Empfangsdiode als Empfänger 5 mit einem nachgeschalteten IR-Empfangsverstärker/IR-Wandler 15, der die von dem Zusatzgerät empfangenen Schallinformationen einem Prozessor 9 zuführt.

Zudem umfaßt die Fernbedienung 1 mindestens ein Mikrofon 4, über welches das auf die Fernbedienung jeweils augenblicklich einwirkendes Schallsignal aufgenommen wird. Das von dem Mikrofon 4 aufgenommene Schallsignal, welches im Falle einer gewünschten Ansteuerung des Fernsehgeräts 21 oder der Stereoanlage 20, 22, 23 einen Sprachbefehl eines Benutzers enthält, wird über einen oder mehrere Empfangsverstärker 10 einem Analog/Digital-Wandler 11 zugeführt und somit digitalisiert. Das digitalisierte Schallsignal wird schließlich dem Prozessor 9 zur Spracherkennung zugeführt.

Der Betrieb des Prozessors 9 erfolgt in Abhängigkeit von einem in einem Programmspeicher 12 abgelegten Programm. In einem Datenspeicher 13, der mit dem Programmspeicher 12 auch ganz oder teilweise identisch sein kann, werden die digitalisierten Daten des Analog/Digital-Wandlers 11 abgelegt.

Vor Durchführung der Spracherkennung wird das von dem Mikrofon 4 aufgenommene Schallsignal von dem Prozessor 9 auf Grundlage der empfangenen Schall- oder Toninformationen des Zusatzgeräts 16 korrigiert. So kann der Prozessor 9 beispielsweise versuchen, zunächst durch Kreuzkorrelation den Grad der Übereinstimmung zwischen dem von dem Mikrofon 4 aufgenommenen Schallsignal und den den Schallinformationen des Zusatzgeräts 16 entsprechenden Tonsignalen zu ermitteln. Entsprechend den somit ermittelten Übereinstimmungskoeffizienten und der daraus ableitbaren akustischen Verzögerung zwischen dem Schallsignal des Mikrofons 4 und den den Schallinformationen des Zusatzgeräts 16 entsprechenden Tonsignalen wird dann das über das Mikrofon 4 aufgenommene Schallsignal korrigiert oder gefiltert, um den Beitrag der den Schallinformationen entsprechenden Tonsignale zu eliminieren. Dabei wird jedes Tonsignal der einzelnen Schallquellen von dem Schallsignal des Mikrofons 4 subtrahiert. Bei einem 5-Kanal Dolby-Surround-Verstärker 22, wie er beispielhaft in Fig. 1 gezeigt ist, werden demzufolge durch die von dem Zusatzgerät 16 übertragenen Schallinformationen fünf separate Tonsignale beschrieben, die von dem Prozessor 9 anschließend separat von dem Schallsignal des Mikrofons 4 abgezogen werden, so daß schließlich nurmehr ein Schallsignal verbleibt, in dem die den Schallinformationen entsprechenden Tonsignale unterdrückt sind. Ein in dem gefilterten oder korrigierten Schallsignal enthaltener Sprachbefehl ist somit nur noch durch einen Fehleranteil verfälscht, der aus vorwiegend unbekannten Störgeräuschen besteht.

Anschließend unterzieht der Prozessor 9 das auf diese Weise aufbereitete Schallsignal einem Spracherkennungsalgorithmus (beispielsweise HMM ("Hidden Markov Model") oder DTW ("Dynamic Time Warping"), wobei das digitalisierte und korrigierte Schallsignal mit vorgegebenen Mustern verglichen wird. Ist die Übereinstimmung nach dem jeweils angewendeten Algorithmus hinreichend, um ein Muster als identifiziert zu bezeichnen, wird ein dem erkannten Muster zugeordneter Prozeß in dem Prozessor 9 gestartet, wodurch ein vordefinierter Steuerbefehl über einen Sendeverstärker 14 und eine IR-Sendediode 6 an das Zusatzgerät 16 gesendet wird. Dabei kann es sich beispielsweise um eine vordefinierte IR-Impulsfolge handeln, die zuvor in der Fernbedienung 1 einprogrammiert wurde.

Anstelle lediglich eines Mikrofons 4 ist auch die Verwendung mehrerer Mikrofone 4 denkbar, welche beispielsweise durch Auswertung der zwischen diesen Mikrofonen vorhandenen akustischen Phasenverschiebung miteinander gekoppelt werden können. Diese Kopplung kann sowohl vor als auch nach der Korrektur bzw. Filterung des Schallsignals erfolgen, wodurch der räumliche Bereich, aus dem eine akustische Eingabe zulässig sein soll, entsprechend eingeschränkt werden kann.

Sollen bereits vorhandene Geräte oder Systeme mit Fernbedienung durch eine Spracherkennungsfunktion erweitert oder eine in der Fernbedienung 1 bereits vorhandene Spracherkennungsfunktion programmiert werden, müssen die von der Fernbedienung 1 erzeugten Steuerbefehle mit den entsprechenden Sprachbefehlen in Relation gesetzt werden. Hierzu kann die Fernbedienung 1 beispielsweise durch einen Tastendruck auf der Tastatur 2 der Fernbedienung oder einen Sprachbefehl (sofern dieser bereits erkannt werden kann) in einen Lernmodus versetzt werden. Anschließend wird eine gewünschte Steuerfunktion der Fernbedienung 1 ausgewählt und der Benutzer beispielsweise über eine kleine LCD-Anzeige 3 der Fernbedienung zur Eingabe eines passenden Sprachmusters aufgefordert. Die Eingabe des Sprachmusters kann dann durch wiederholtes Vorsprechen und Aufzeichnen des Sprachbefehls, durch Verwendung eines sogenannten Say-In-Tools auf der Fernbedienung 1, durch Eingeben einer Phonemsequenz über die Tastatur 2 oder durch Auswahl von vorgegebenen Wörtern und Kombination derer zu dem gewünschten Sprachbefehl usw. erfolgen. Durch einen erneuten Tastendruck oder geeigneten Sprachbefehl kann die Eingabe abgeschlossen werden.

Bei dem in Fig. 1 gezeigten Beispiel sind das Zusatzgerät 16 und die Lautsprecher 24 gemeinsam für das Fernsehgerät 21 sowie die Stereoanlage 20, 22 vorgesehen. Ebenso ist jedoch selbstverständlich auch möglich, daß die einzelnen Schallquellen mit jeweils individuellen Lautsprechern und/oder individuellen Zusatzgeräten 16 betrieben werden, wobei dann in diesem Fall von jedem Zusatzgerät nur Schallinformationen über das von der entsprechenden Schallquelle augenblicklich erzeugte Ton- oder Schallsignal an die Fernbedienung 1 gesendet und nur die von der Fernbedienung 1 für die entsprechende Schallquelle bestimmten Steuerbefehle oder Steuerinformationen ausgewertet werden.

## Patentansprüche

1. Sprachgesteuerte Vorrichtung,
mit Schalldetektormitteln (4) zum Erfassen eines Schallsignals, und
mit Spracherkennungsmitteln (9) zum Erkennen eines in dem Schallsignal enthaltenen Sprachbefehls und zum Umsetzen des Sprachbefehls in ein entsprechendes Steuersignal für die sprachgesteuerte Vorrichtung (20-22), wobei
Empfangsmittel (5) zum Empfangen von Schallinformationen von Sendemitteln (18), die mindestens einer Schallquelle (20-22) zugeordnet sind, vorgesehen sind, und
wobei mit den Schalldetektormitteln (4) und den Empfangsmitteln (5) gekoppelte Schallsignalverarbeitungsmittel (9) vorgesehen sind zum Korrigieren des von den Schalldetektormitteln (4) erfaßten Schallsignals unter Verwendung der von den Empfangsmitteln (5) empfangenen Schallinformationen durch Beseitigung einer den Schallinformationen entsprechenden Komponente aus dem Schallsignal und zur Zuführung des auf diese Weise korrigierten Schallsignals zu den Spracherkennungsmitteln (9) zur Auswertung
**dadurch gekennzeichnet,**
**daß** die Schalldetektormittel (4), die Empfangsmittel (5), die Schallsignalverarbeitungsmittel (9) und die Spracherkennungsmittel (9) in einem von der sprachgesteuerten Vorrichtung (20-22) separat vorgesehenen Mobilteil (1) angeordnet sind und daß die Sendemittel (18) dazu ausgebildet sind, Tonsignale von der mindestens einen Schallquelle (20-22) zu empfangen, in die Schallinformationen umzusetzen und die Schallinformationen über einen als Infrarot- oder Funkkanal ausgebildeten drahtlosen Kommunikationskanal (8) an die Empfangsmittel (5) zu übertragen.

2. Vorrichtung nach Anspruch 1,
**dadurch gekennzeichnet,**
**daß** das Mobilteil (1) einen Sender (6) zum Senden des dem Sprachbefehl entsprechenden Steuersignals an einen der sprachgesteuerten Vorrichtung (20-22) zugeordneten Empfänger (17) aufweist.

3. Vorrichtung nach Anspruch 2,
**dadurch gekennzeichnet,**
**daß** der Sender (6) des Mobilteils (1) mit dem der sprachgesteuerten Vorrichtung zugeordneten Empfänger (17) über einen drahtlosen Kommunikationskanal (7) kommuniziert.

4. Vorrichtung nach einem der vorhergehenden Ansprüchen,
**dadurch gekennzeichnet,**
**daß** die Schallsignalverarbeitungsmittel (9) derart ausgestaltet sind, daß sie den Grad der Übereinstimmung zwischen dem von dem Schalldetektormitteln (4) erfaßten Schallsignal und einem den Schallinformationen entsprechenden Schallsignal ermitteln, um somit die akustische Verzögerung zwischen den beiden Schallsignalen zu bestimmen, wobei die Schallsignalverarbeitungsmittel (9)
das von den Schalldetektormitteln (4) erfaßte Schallsignal unter Berücksichtigung dieser akustischen Verzögerung korrigieren.

5. Vorrichtung nach Anspruch 4,
**dadurch gekennzeichnet,**
**daß** die Schallsignalverarbeitungsmittel (9) derart ausgestaltet sind, daß sie den Grad der Übereinstimmung zwischen dem von den Schalldetektormitteln (4) erfaßten Schallsignal und dem den Schallinformationen entsprechenden Schallsignal durch Kreuzkorrelation ermitteln.

6. Vorrichtung nach Anspruch 4 oder 5,
**dadurch gekennzeichnet,**
**daß** die Schallsignalverarbeitungsmittel (9) derart ausgestaltet sind, daß sie das den Schallinformationen entsprechende Schallsignal unter Berücksichtigung der ermittelten akustischen Verzögerung von dem von den Schalldetektormitteln (4) erfaßten Schallsignal subtrahieren, um somit das den Schallsignalverarbeitungsmitteln (9) zuzuführende korrigierte Schallsignal zu erhalten.

7. Vorrichtung nach einem der vorhergehenden Ansprüche,
**dadurch gekennzeichnet,**
**daß** die Schalldetektormittel (4) mehrere Mikrofone umfassen, welche unter Berücksichtigung der zwischen ihnen vorhandenen akustischen Phasenverschiebung miteinander gekoppelt sind.

8. Vorrichtung nach einem der vorhergehenden Ansprüche,
**dadurch gekennzeichnet,**
**daß** Programmiermittel (2) zum Programmieren der Spracherkennungsmittel (9) vorgesehen sind.

9. Vorrichtung nach einem der vorhergehenden Ansprüche,
**dadurch gekennzeichnet,**
**daß** die Schallsignalverarbeitungsmittel (9) derart ausgestaltet sind, daß sie, falls die von den Empfangsmitteln (5) empfangenen Schallinformationen mehreren Schallquellen (20-22) zugeordnet sind, das von den Schalldetektormitteln (4) erfaßte Schallsignal für jede einzelne Schallquelle (20-22) separat korrigieren.

10. System,
mit einer sprachgesteuerten Vorrichtung (20-22) nach einem der vorhergehenden Ansprüche, und
mit mindestens einer Schallquelle (20-22), welcher Sendemittel (18) zum Senden der Schallinformationen an die Empfangsmittel (5) der sprachgesteuerten Vorrichtung zugeordnet sind, wobei die Schallinformationen jeweils das von der Schallquelle (20-22) augenblicklich erzeugte Schallsignal beschreiben, wobei
die der Schallquelle (20-22) zugeordneten Sendemittel (18) mit den der sprachgesteuerten Vorrichtung (20-22) zugeordneten Empfangsmitteln (5) über einen als Infranot- oder Funkhanal ausgebildeten drahtlosen Kommunikationskanal kommunizieren.

11. System nach Anspruch 10,
**dadurch gekennzeichnet,**
**daß** die sprachgesteuerte Vorrichtung selbst zu der mindestens einen Schallquelle (20-22) gehört, so daß die von den Sendemitteln (18) an die der sprachgesteuerten Vorrichtung zugeordneten Empfangsmittel (5) gesendeten Schallinformationen das von der sprachgesteuerten Vorrichtung augenblicklich erzeugte Schallsignal beschreiben.

12. System nach einem der Ansprüche 10 bis 11,
**dadurch gekennzeichnet,**
**daß** es sich bei der sprachgesteuerten Vorrichtung (20-22) um ein Gerät der Unterhaltungselektronik handelt.

13. System nach einem der Ansprüche 10 bis 12,
**dadurch gekennzeichnet,**
**daß** es sich bei der mindestens einen Schallquelle (20-22) um ein Gerät der Unterhaltungselektronik handelt.

## Claims

1. A voice-controlled device,
having sound detection means (4) for recording a sound signal, and
having voice recognition means (9) for recognising a voice command contained in the sound signal and for converting the voice command into a corresponding control signal for the voice-controlled device (20 - 22),
there being provided receive means (5) for receiving items of sound information from transmit means (18), which are assigned to at least one sound source (20 - 22), and
there being provided sound signal processing means (9), coupled to the sound detection means (4) and the receive means (5), for correcting the sound signal recorded by the sound detection means (4) by using the items of sound information received by the receive means (5) by eliminating a component corresponding to the items of sound information from the sound signal and to supply the sound signal corrected in this manner to the voice recognition means (9) for evaluation,
**characterised in that** the sound detection means (4), the receive means (5), the sound signal processing means (9) and the voice recognition means (9) are disposed in a mobile part (1) provided separately from the voice-controlled device (20 - 22),
and **in that** the transmit means (18) are designed to receive sound signals from the at least one sound source (20 - 22), to convert them into the items of sound information and to transmit the items of sound information to the receive means (5) via a wireless communication channel (8) designed as an infrared or radio channel.

2. A device according to Claim 1,
**characterised in that** the mobile part (1) comprises a transmitter (6) for transmitting the control signal corresponding to the voice command to a receiver (17) assigned to the voice-controlled device (20 - 22).

3. A device according to Claim 2,
**characterised in that** the transmitter (6) of the mobile part (1) communicates with the receiver (17) assigned to the voice-controlled device via a wireless communication channel (7).

4. A device according to one of the preceding Claims,
**characterised in that** the sound signal processing means (9) are configured such that they determine the degree of correlation between the sound signal recorded by the sound detection means (4) and a sound signal corresponding to the items of sound information, in order thus to determine the acoustic delay between the two sound signals, whereby the sound signal processing means (9) correct the sound signal recorded by the sound detection means (4) taking into consideration this acoustic delay.

5. A device according to Claim 4,
**characterised in that** the sound signal processing means (9) are configured such that they determine the degree of correlation between the sound signal recorded by the sound detection means (4) and the sound signal corresponding to the items of sound information by cross-correlation.

6. A device according to Claim 4 or 5,
**characterised in that** the signal processing means (9) are configured in such a manner that they subtract the sound signal corresponding to the items of sound information from the sound signal recorded by the sound detection means (4) whilst taking into consideration the determined acoustic delay in order thus to obtain the corrected sound signal to be supplied to the sound signal processing means (9).

7. A device according to one of the preceding Claims,
**characterised in that** the sound detection means (4) comprise several microphones, which are coupled to each other taking into consideration the acoustic phase shift present between them.

8. A device according to one of the preceding Claims,
**characterised in that** programming means (2) are provided to program the voice recognition means (9).

9. A device according to one of the preceding Claims,
**characterised in that** the sound signal processing means (9) are configured in such a manner that they separately correct the sound signal recorded by the sound detection means (4) for each individual sound source (20 - 22) if the items of sound information received by the receive means (5) are assigned to several sound sources (20 - 22).

10. A system,
having a voice-controlled device (20 - 22) according to one of the preceding Claims, and
having at least one sound source (20 - 22), to which transmit means (18) for transmitting the items of sound information to the receive means (5) of the voice-controlled device are assigned,
the items of sound information in each case describing the sound signal generated by the sound source (20 - 22) at that instant,
the transmit means (18) assigned to the sound source (20 - 22) communicating with the receive means (5) assigned to the voice-controlled device (20 - 22) via a wireless communication channel designed as an infrared or radio channel.

11. A system according to Claim 10,
**characterised in that** the voice-controlled device itself belongs to the at least one sound source (20 - 22), so that the items of sound information transmitted by the transmit means (18) to the receive means (5) assigned to the voice-controlled device describe the sound signal generated by the voice-controlled device at that instant.

12. A system according to one of Claims 10 to 11,
**characterised in that** the voice-controlled device (20 - 22) is an item of electronic entertainment equipment.

13. A system according to one of Claims 10 to 12,
**characterised in that** the at least one sound source (20 - 22) is an item of electronic entertainment equipment.

## Revendications

1. Dispositif à commande vocale comportant des moyens de détection sonore (4) pour saisir un signal sonore et
des moyens de reconnaissance vocale (9) pour reconnaître un ordre vocal contenu dans un signal sonore et pour convertir l'ordre vocal en un signal de commande correspondant pour le dispositif à commande vocale (20, 22),
selon lequel
des moyens de réception (5) sont prévus pour recevoir des informations sonores de moyens d'émission (18) ayant au moins une source sonore (20-22), et
des moyens de traitement de signaux sonores (9) sont couplés au moyen de détection sonore (4) et aux moyens de réception (5) pour corriger le signal sonore saisi par les moyens de détection sonore (4) en utilisant les informations sonores reçues par les moyens de réception (5), par l'élimination d'une composante correspondant à l'une des informations sonores du signal sonore et en appliquant le signal sonore corrigé de cette manière aux moyens de reconnaissance vocale (9) pour l'exploitation,
**caractérisé en ce que**
les moyens de détection sonore (4), les moyens de réception (5), les moyens de traitement du signal sonore (9) et les moyens de reconnaissance vocale (9) sont installés dans une partie mobile (1) distincte du dispositif à commande vocale (20-22), et
les moyens d'émission (18) sont réalisés pour recevoir les signaux sonores d'au moins une source sonore (20-22), les convertir en informations sonores et transmettre les informations sonores par un canal de communication sans fil (8) réalisé sous la forme d'un canal infrarouge ou d'un canal radio vers les moyens de réception (5).

2. Dispositif selon la revendication 1,
**caractérisé en ce que**
la partie mobile (1) comporte un émetteur (6) pour émettre le signal de commande correspondant à l'ordre vocal vers un récepteur (17) associé au dispositif à commande vocale (20-22).

3. Dispositif selon la revendication 2,
**caractérisé en ce que**
l'émetteur (6) de la partie mobile (1) communique avec le récepteur (17) associé au dispositif à commande vocale par un canal de communication sans fil (7).

4. Dispositif selon l'une des revendications précédentes, c
**caractérisé en ce que**
les moyens de traitement du signal sonore (9) sont réalisés pour déterminer le degré de concordance entre le signal sonore saisi par les moyens de détection sonore (4) et un signal sonore correspondant aux informations sonores, afin de déterminer le retard acoustique entre les deux signaux sonores, et
les moyens de traitement (9) du signal sonore corrigent le signal sonore saisi par les moyens de détection (4) en tenant compte de ce retard acoustique.

5. Dispositif selon la revendication 4,
**caractérisé en ce que**
les moyens de traitement du signal sonore (9) sont réalisés de façon à déterminer le degré de concordance entre le signal sonore saisi par les moyens de détection sonore (4) et le signal sonore correspondant aux informations sonores par une corrélation croisée.

6. Dispositif selon les revendications 4 ou 5,
**caractérisé en ce que**
les moyens de traitement du signal sonore (9) sont réalisés pour soustraire le signal sonore correspondant aux informations sonores en tenant compte du retard acoustique déterminé du signal sonore saisi par les moyens de détection sonore (4), afin d'obtenir le signal sonore corrigé destiné aux moyens de traitement (9) du signal sonore.

7. Dispositif selon l'une des revendications précédentes,
**caractérisé en ce que**
les moyens de détection sonore (4) comprennent plusieurs micros couplés les uns aux autres en tenant compte du déphasage acoustique qui existe entre eux.

8. Dispositif selon l'une des revendications précédentes,
**caractérisé par**
des moyens de programmation (2) pour programmer les moyens de reconnaissance vocale (9).

9. Dispositif selon l'une des revendications précédentes,
**caractérisé en ce que**
les moyens de traitement (9) du signal sonore sont réalisés pour qu'au cas où les informations sonores reçues par les moyens de réception (5) seraient associées à plusieurs sources sonores (20-22), le signal sonore saisi par les moyens de détection sonore (4) soit corrigé séparément pour chacune des différentes sources sonores (20-22).

10. Système comprenant
- un dispositif à commande vocale (20-22) selon l'une des revendications précédentes, et
- au moins une source sonore (20-22) comportant des moyens d'émission (18) pour émettre des informations sonores vers les moyens de réception (5) du dispositif à commande vocale, les informations sonores décrivant le signal sonore généré instantanément par la source sonore (20-22),
selon lequel
les moyens d'émission (18) associés à la source sonore (20-22) communiquent avec les moyens de réception (5) associés au dispositif à commande vocale (20-22) par un canal de communication sans fil réalisé sous la forme d'un canal infrarouge ou d'un canal radio.

11. Système selon la revendication 10,
**caractérisé en ce que**
le dispositif à commande vocale lui-même fait partie d'au moins une source sonore (20-22) de façon que les informations sonores émises par les moyens d'émission (18) vers les moyens de réception (5) associés au dispositif à commande vocale, décrivent le signal sonore généré instantanément par le dispositif à commande vocale.

12. Système selon l'une des revendications 10 à 11,
**caractérisé en ce que**
le dispositif à commande vocale (20-22) est un appareil électronique de loisirs.

13. Système selon les revendications 10 à 12,
**caractérisé en ce qu'**
au moins une source (20-22) est un appareil électronique de loisirs.
